# EUROPEAN PATENT APPLICATION

(11) **EP 1 243 606 A1**
(43) Date of publication of application: **25.09.2002**
(21) Application number: 02005993.7
(22) Date of filing: 15.03.2002
(51) Int. Cl.: C08G 18/42, C08G 18/67, C09D 175/16

(54) **A resin composition for forming a matte-finished surface and a method of forming a matte-finished surface**

(30) Priority: 19.03.2001 US 810562
(71) Applicant: Four Trend, Inc., Clearwater, Florida 33765 (US)
(72) Inventor: Bailey, Clive, Tampa, Florida 33617 (US)
(74) Representative: Schäfer, Matthias, Dipl.-Ing.

(57) **Abstract**

A resin composition for forming a matte-finished surface comprises a urethane acrylate prepared with an alicyclic isocyanate compound, an ester-type polyol, and an acrylate having hydroxyl group(s) as its essential components; an acrylate-type reactive diluent; and a photo-initiator having absorption characteristics of molar absorbance coefficient of not more than 100 (1 · mol⁻¹ · cm⁻¹) for light having a wavelength not lower than 400 nm.

## Description

### BACKGROUND OF THE INVENTION

### Field of the Invention

This invention relates to a resin composition for forming a matte-finished surface and to a method of forming such a matte-finished surface to improve design, aesthetic appearance, and light-scattering effects by creating minute wrinkles in the various surface treatment processes used for building materials, the interior of transport vehicles, decoration of glass, housings for electrical appliances and electronic products and others.

### Description of the Prior Art

In order to improve the design and aesthetic appearance of molded goods, various surface treatment agents have been used to matte-finish a surface with a light-scattering effect. Among the methods conventionally used are the incorporation of flatting pigments into coatings and inks or blast treatment of surfaces. However, the use of flatting pigments in coating and ink compositions has the disadvantage that such pigments tend to reduce light transmission, thereby rendering the coated film opaque. Blast treatment, on the other hand, limits productivity due to the complexity of its process.

In the case of UV curable resins with excellent curability and producibility, UV irradiation in an atmosphere of nitrogen creates wrinkles on cured resin surfaces in order to provide matte finishes. However, uniform and reproducible wrinkles have been difficult to obtain with UV curing processes under nitrogen. In addition, such treatment entails the additional cost of nitrogen.

Recently, in Japanese Laid-Open Publication H6-312495, a process has been disclosed involving the generation of wrinkles by irradiation with UV light having a wavelength of not more than 300 nm. However, irradiation of light with lower wavelengths may not always provide wrinkles, or uniform wrinkles even if wrinkles form.

An object of the present invention is to provide a resin composition for a matte-finished surface having an excellent design, pleasant aesthetic appearance, and sufficient surface adhesion characteristics when used as a coating, and a method for making such a matte-finished surface with superior reproducibility using said resin composition.

### SUMMARY OF THE INVENTION

In accordance with the present invention, the above object is achieved by providing a resin composition for forming a matte-finished surface comprising:
(A) a urethane acrylate prepared with (a) an alicyclic isocyanate compound, (b) an ester-type polyol, and (c) an acrylate having hydroxyl group(s) as its essential components;
(B) an acrylate-type reactive diluent; and
(C) a photo-initiator having absorption characteristics of molar absorbance coefficient of not greater than 100 (1 • mol⁻¹ • cm⁻¹) for light having a wavelength not lower than 400 nm.

Preferably used in the resin composition for forming a matte-finished surface of the invention are a poly-caprolactone having 3 or more functional hydroxyl groups for a ester-type polyol (b), and an acrylate-type reactive diluent (B) having tetrahydrofurfuryl group(s).

A method according to the present invention for forming a matte-finished surface comprises the formation of minute wrinkles on a cured resin surface by irradiating such resin surface with a UV lamp at a maximum intensity at not more than 300 nm, with the relative intensity of light in the range of from 300 nm to 800 nm being not more than 20%.

Another method according to this invention for forming a matte-finished surface comprises the steps of:
irradiating a resin composition with a UV lamp at a maximum intensity at not more than 300 nm, with the relative intensity
providing minute wrinkles on the cured resin surface by of light in the range of from 300 nm to 800 nm being not more than 20%; and
further curing said resin by irradiating it with UV light at a maximum intensity at not less than 300 nm.

Further features of the invention, its nature and various advantages will be more apparent from the following detailed description of the invention.

### DESCRIPTION OF THE PREFERRED EMBODIMENTS

In our efforts to develop uniform and reproducible wrinkles on cured surfaces using UV curing, the selection of the resin type and photo-initiator were crucial decisions. After extensive study, we successfully completed the present invention by using a certain resin composition comprising a certain urethane acrylate, a reactive diluent, and a photo-initiator having an absorption characteristic with a molar absorbance coefficient of not greater than 100 (1 • mol⁻¹ • cm⁻¹) for light having a wavelength not lower than 400 nm.

Further, we developed a method for providing a matte-finished surface wherein resin surfaces are irradiated with a UV lamp capable of emitting light at a maximum intensity at not more than 300 nm, with the relative intensity of light in the range of from 300 nm to 800 nm being not more than 20%, thereby causing minute wrinkles to form on the resin surface. We also developed a method to obtain matte-finished surfaces with thoroughly cured inner parts by further irradiating the cured resin surface with UV light at a maximum intensity at not less than 300 nm.

The alicyclic isocyanate (a) used in this invention for preparing the resin composition for a matte-finished surface includes isophorone diisocyanate, hydrogenated xylene diisocyanate, dicyclohexylmethane diisocyanate, etc. Isocyanurate and biuret derivatives of such alicyclic isocyanates, in combination with aromatic isocyanates and aliphatic isocyanates, and co-isocyanurated derivatives may also be used. The ester-type polyols (b) used in this invention are polyol compounds and esterified compounds with polycarboxylic compounds. Also used is the ring-opening reaction product of cyclic ester with polyol. Examples of polyols include ethylene glycol, 1, 3- propylene glycol, 1, 2-propylene glycol, diethylene glycol, dipropylene glycol, neopentyl glycol, 1, 3-butanediol, 1, 4-butanediol, 1, 6-hexanediol, 1, 9-nonanediol, 1, 10-decanediol, 2, 2, 4-trimethyl-1, 3-pentanediol, 3-methyl-1, 5-pentanediol, dichloroneopentyl glycol, dibromoneopentyl glycol, hydroxypivalic acid neopentyl glycol ester, cyclohexane dimethylol, 1, 4-cycloheanediol, spiroglycol, tricyclodecane dimethylol, hydrogenated bis-phenol A, bis-phenol A ethylene oxide adduct, bis-phenol A propylene oxide adduct, trimethylolethane, trimethylolpropane, glycerine, 3-methylpentane-1, 3, 5-triol, pentaerythritol, dipentaerythritol, tripentaerythritol, and glucoses.

Carboxylic-group-containing compounds used in this invention may be commonly known carboxylic acids, anhydride derivatives thereof and ester compounds of carboxylic-group-containing compounds with lower alkyl alcohols. Typical examples of carboxylic-group-containing compounds include maleic acid, fumaric acid, itaconic acid, citraconic acid, tetrahydrophthalic acid, Het acid, Himic acid, chlorendic acid, dimer acid, adipic acid, succinic acid, alkenylsuccinic acid, sebacic acid, azelaic acid, 2, 2, 4-trimethyladipic acid, 1, 4-cyclohexane dicarboxylic acid, terephthalic acid, 2-sodium sulfo-terephthalic acid, 2-potassium sulfo-terephthalic acid, isophthalic acid, 5-sodium sulfo-isophthalic acid, 5-potassium sulfo-isophthalic acid, or 5-sodium sulfo isophthalic acid di-lower alkyl esters, such as dimethyl- or diethyl esters, or orthophthalic acid, 4-sulfophthalic acid, 1, 10-decamethylene dicarboxylic acid, muconic acid, oxalic acid, malonic acid, glutaric acid, trimellitic acid, hexahydrophthalic acid, tetrabromophthalic acid, methylcyclohexene tricarboxylic acid or pyromellitic acid, or anhydride derivatives of the above acids, or alcohol esters, such as those with methanol, ethanol, etc.

Examples of cyclic esters include γ-butyrolactone, γ-valerolactone, δ-valerolactone, substituted ε-caprolactones, D-glucono-1,4-lactone, 1, 10-phenanthrene carbolactone, 4-pentene-5-olido lactone, and 12-dodecanolido lactones. The substituted ε-caprolactones mentioned above include mono-alkyl substituted lactones such as ε-monoalkylcaprolactones having an alkyl group containing 1 to 12 carbon atoms. These include ε-ethylcaprolactone, ε-propylcaprolactone, ε-dodecylcaprolactone, and so forth, and di- and tri-alkyl substituted lacto.

Among polyester polyols prepared from the above raw materials, polycaprolactone-type polyols are preferred, due to the ease of obtaining uniform wrinkles, good adhesion to various materials, acceptable physical properties of coated film, etc. Molecular weights in the range of 300 to 5000 are preferred. Additionally, polyols having 3 or more functional groups are preferred for their curability and stability in the formation of wrinkles.

The acrylate compounds containing hydroxyl group(s)(c) used in this invention may be commonly known compounds. Typical examples include, but are not limited to, 2-hydroxyethyl (meth)acrylates, 2-hydroxypropyl (meth)acrylates, 2-hydroxybutyl (meth)acrylates, 3-hydroxybutyl (meth)acrylates, 4-hydroxybutyl (meth)acrylates, polyethylene glycol mono(meth)acrylates, polypropylene glycol mono(meth)acrylates, pentaerythritol tri(meth)acrylates, or glycidyl methacrylate-(meth)acrylic acid adduct.

The ring-opening reaction products of the above hydroxy-group-containing (meth)acrylates and ε -caprolactones and their derivatives are also usable.

The urethane acrylates(A) used in this invention are easily prepared by reacting (a) an alicyclic isocyanate, (b) an ester-type polyol, and (c) a hydroxyl-group-containing acrylate compound in the temperature range from 50-120° C in the presence of a catalyst for urethane formation, as required.

The urethane synthesis reaction in this invention may be made by a method in which all raw materials are charged together. After synthesizing a prepolymer by reacting a polyol component and an isocyanate component under a condition of excess isocyanate groups, the remaining isocyanate group in the prepolymer is further reacted with a hydroxyl group containing acrylate to form the desired urethane.

Another method involves the preparation of a prepolymer by reacting a hydroxyl-group-containing acrylate with an isocyanate compound in the presence of excess isocyanate groups. The remaining isocyanate in the prepolymer is then reacted with a polyester polyol. Ideally, the molecular weight of the resulting urethane acrylate thus prepared is in the range of 700 - 20000.

In this invention, the addition of an acrylate-type reactive diluent (B) is preferred to improve various physical properties in order to obtain desirable coating and printing characteristics.

Examples of such acrylic reactive diluents (B) include monofunctional polymerizable diluents, such as methoxyethylene glycol (meth)acrylates, methoxypolyethylene glycol (meth)acrylates, β-(meth)acryloyloxyethyl hydrogenphthalate, β-(meth)acryloyloxyethyl hydrogensuccinate, nonylphenoxyethyl (meth)acrylates, 3-chloro-2-hydroxypropyl (meth)acrylates, phenoxyethyl (meth)acrylates, phenoxypolyethyleneglycol (meth)acrylates, methoxypolyethylene glycol (meth)acrylates, β -(meth)acryloyloxypropyl hydrogenphthalates, β-(meth)acryloyloxypropyl hydrogensuccinates, butoxypolyethylene glycol (meth)acrylates, alkyl (meth)acrylates, cyclohexyl (meth)acrylates, tetrahydrofurfryl (meth)acrylates, isobornyl (meth)acrylates, benzyl (meth)acrylates, 2-hydroxyethyl (meth)acrylates, 2-hydroxypropyl (meth)acrylates, 2-hydroxy-3-phenoxypropyl (meth)acrylates, 2-(meth)acryloyloxyethyl-2-hydroxyethyl phthalic acids, 3-acryloyloxyglycerine mono(meth)acrylates, 2-hydroxybutyl (meth)acrylates, 2-hydroxy-1-(meth)acryloxy-3-(meth)acryloxypropanes, polypropylene glycol mono(meth)acrylates, polyethyleneglycol mono(meth)acrylates, poly-ε-caprolactone mono(meth)acrylates, dialkylaminoethyl (meth)acrylates, glycidyl (meth)acrylates, mono[2-(meth)acryloyloxyethyl] acid phosphates, trifluoroethyl (meth)acrylates, 2, 2, 3, 3-tetrafluoropropyl (meth)acrylates, 2, 2, 3, 4, 4, 4-hexafluorobutyl (meth)acrylates, perfluorooctylethyl (meth)acrylates, dicyclopentenyloxyalkyl (meth)acrylates, dicyclopentenyl (meth)acrylates, tricyclodecanyl (meth)acrylates, tricyclodecanyloxyethyl (meth)acrylates, isobornyloxyethyl (meth)acrylates, and difunctional polymerizable diluents such as 2, 2-dimethyl-3-hydroxypropyl-2, 2-dimethyl-3-hydroxypropyonate di(meth)acrylates, ethylene glycol di(meth)acrylates, polyethylene glycol di(meth)acrylates, propylene glycol di(meth)acrylates, polypropylene glycol di(meth)acrylates, 1, 4-butanediol di(meth)acrylates, 1, 6-hexanediol di(meth)acrylates, glycerine di(meth)acrylates, neopentyl glycol di(meth)acrylates, hydroxypivalic acid neopentyl glycol di(meth)acrylates, bis-phenol A ethylene oxide adduct di(meth)acrylates, bis-phenol A propylene oxide adduct di(meth)acrylates, 2, 2'-di(hydroxypropoxyphenyl)propane di(meth)acrylates, 2, 2'-di(hydroxyethoxyphenyl)propane di(meth)acrylates, tricyclodecane dimethylol di(meth)acrylates, 2, 2'-di(glycidyloxyphenyl)propane (meth)acrylate adducts, and multifunctional polymerizable diluents, such as trimethylolpropane tri(meth)acrylates, pentaerythritol tri(meth)acrylates, pentaerythritol tetra(meth)acrylates, dipentaerythritol hexa(meth)acrylates, tetramethylolmethane tri(meth)acrylates, tetramethylolmethane tetra(meth)acrylates, tris-(2-hydroxyethyl)isocyanurate tri(meth)acrylates, tris-(hydroxypropyl)isocyanurate tri(meth)acrylates, trimellitic acid tri(meth)acrylates, triallyltrimellitic acid, and triallylisocyanurate.

Ideally, the acrylates should contain tetrahydrofurfuryl group(s) to ensure reproducibility in wrinkle formation, curability, adhesion, etc. Such acrylates include, but are not limited to, tetrahydrofurfuryl acrylate, lactone-modified tetrahydrofurfuryl acrylate, dimer-acrylic acid modified terahydrofurfuryl acrylate, and dimer-acrylic acid modified and lactone modified tetrahydrofurfuryl acrylate.

When forming a matte-finished surface, it is preferable to use a photopolymerization initiator and a photo-sensitizer for the curing reaction by UV irradiation in resin composition. Although conventional initiators for photopolymerization may be used as initiators for this invention, more suitable in terms of uniform and reproducible wrinkle formation is a photo-initiator (C) having an absorption characteristic of the molar absorbance coefficient of not greater than 100 (1 • mol⁻¹ • cm⁻¹) for wavelengths not lower than 400 nm. Such photo-initiators include, but are not limited to, 2-hydroxy-2-methylpropiophenone, 1-hydroxycyclohexyl henyl ketone, 2, 2-dimethoxy-2-phenylacetophenone, 2, 2-diethoxy-2-phenylacetophenone, alkoxyacetophenone, benzophenone, and benzophenone derivatives. The amount of photo-initiator (C) should fall in the range of 0.2 - 30 parts by weight per 100 parts of acrylate resin component; values falling in the range of 2 - 20 parts are even better. Such photo-initiators may be used in combination with one or more conventional photopolymerization accelerators.

To adjust the viscosity of the resin composition for a matte-finished surface in this invention, various solvents such as ester, ether, ketone, alcohol, aromatic and aliphatic compound may be added. Within certain limits, other components may be added as required to the curing composition of this invention if the UV-curing of the composition is not disturbed. These include conventional polymerization inhibitors, antioxidants, dispersants, surfactants, inorganic fillers, inorganic pigments, organic pigments, organic dyes, light stabilizers, leveling agents, antifoamers, corrosion inhibitors, and so forth.

Any substrate may be coated with the resin composition for a matte-finished surface described in this invention, including, but not limited to, films, sheets, molded goods of various shapes, plastics such as polycarbonates, polyvinyl chlorides, acrylics and polyesters, as well as wood, metal, and paper. In this invention, any type of commonly used coating method may be applied for the coating of the resin composition, including screen-printing, roll-coating, curtain-coating, spray-coating, spin-coating, and so forth. To obtain adequate wrinkle formation and reproducibility, the preferred film thickness falls in the range of 10µm - 1mm; even better are thicknesses in the range of 20µm - 500µm.

The UV irradiation equipment used in this invention has a UV lamp No. 1 having a maximum light intensity at a wavelength of not more than 300 nm, with relative light intensity in the range of from 300 nm - 800 nm of not more than 20%. Ideally, this UV lamp is a low-pressure mercury lamp. When the UV lamp No. 1 is a high-pressure mercury lamp, use a monochromator to select a wavelength, or use a filter to reduce light of wavelengths greater than 300 nm in order to adjust light intensity in the range 300 - 800 nm to not more than 20%. When such UV light is emitted, nonuniform light absorption by the coated resin surface and by the inner parts of the resin creates nonuniform curability and nonuniform shrinkage, since the curing results in wrinkle formation on the surface of the resin. For this reason, wrinkle formation depends on irradiation conditions. The UV wavelength selected is the most significant factor influencing wrinkle formation.

Following irradiation with UV lamp No.1 to form wrinkles on the resin surface, another lamp (UV lamp No.2) having its maximum light intensity at a wavelength not lower than 300 nm is used to thoroughly cure the inner part of the coated resin to improve the adhesion of the coated film to the substrate, and/or to improve the physical properties and durability of the coated film.

Although UV curing may be performed in an atmosphere of inert gas such as nitrogen to provide a matte-finished surface on the cured resin surface using the said resin composition, such a gas is not required in this invention. Irradiation can be performed in untreated air. Following irradiation with UV lamp No. 1 to form wrinkles on the surface of the resin using said resin composition, it is also possible to apply heat instead of using the No.2 UV lamp to thoroughly cure the inner part of the coated film.

The invention will now be explained with respect to examples. The following examples, comparative examples, and test results provide more specific illustrations of the present invention, but do not in any way indicate limitations of the scope of the invention. Unless otherwise specified, figures in parts and percentages are based on weight.

### Synthesis Example 1:Synthesis of polyurethane acrylate

To a flask equipped with a thermometer and a stirrer, 666 parts of isophorone diisocyanate, 440 parts of tetrahydrofurfuryl acrylate, and 300 parts of polyethylene glycol diacrylate (molecular weight approximately 300) were added. The mixture was then heated to 70°C. A ring-opening reaction product of ε -caprolactone with trimethylolpropane, 1200 parts (hydroxyl value 140 KOH-mg/g, molecular weight approximately 1200), was then added to the above over the course of one hour, as it was stirred. The mixture was allowed to react at 70° C for 7 hours. Following confirmation that the amount of isocyanate group remaining in the system was 4.9%, 350 parts of 2-hydroxyethyl acrylate was added. After the mixture was allowed to react at 70° C for 7 hours, the infrared absorption spectrum confirmed there was no remaining isocyanate group in the system.

### Example 1

A coating was formulated using the formulation shown below, then applied to a polycarbonate substrate at a film thickness of 50 µm. From two low-pressure mercury lamps (1w/cm) at a height of 15 mm, UV light irradiation was applied to the coated film at a line speed of 6 m/min. Subsequently, a high-pressure mercury lamp (80 w/cm) was used for further irradiation from a height of 15 cm at a line speed of 6 m/min. The results of the evaluation are shown in Table 1.

| Coating formulation | |
|---|---|
| Urethane acrylate (Synthesis Example 1) | 97 parts |
| 2-Hydroxy-2-methyl-1-phenylpropane-1-one | 3 parts |
| Total | 100 parts |

2-Hydroxy-2-methyl-1-phenyl propane-1-one used has a molar absorption coefficient of less than 20 (1 • mol⁻¹ • cm⁻¹) for light having wavelengths not lower than 400 nm.

### Example 2

A coating was prepared using the formulation shown below. This coating was applied to a polycarbonate substrate at a film thickness of 50 µm. UV irradiation was applied from a height of 15 mm to the coated film using two low-pressure mercury lamps (1w/cm) at a line speed of 6 m/min. Further irradiation was applied from a height of 15 cm using a high-pressure mercury lamp (80w/cm) at a line speed of 6 m/min. The results of the evaluation are shown in Table 1.

| Coating formulation | |
|---|---|
| Urethane acrylate (Synthesis Example 1) | 97 parts |
| 1-Hydroxycyclohexyl phenyl ketone | 3 parts |
| Total | 100 parts |

The 1-Hydroxycyclohexyl phenyl ketone used has a molar absorption coefficient of less than 20 (1 • mol⁻¹ • cm⁻¹) for light having wavelengths not lower than 400 nm.

### Comparative Example 1

A coating was prepared using the formulation shown below. This coating was applied to a polycarbonate substrate at a film thickness of 50 µm. UV irradiation was applied from a height of 15 cm using a high-pressure mercury lamp (80w/cm) at a line speed of 6 m/min. The results of the evaluation are shown in Table 1.

| Coating formulation | |
|---|---|
| Urethane acrylate (Synthesis Example 1) | 97 parts |
| 2-Hydroxy-2-methyl-1-phenylpropane-1-one | 3 parts |
| Total | 100 parts |

### Comparative Example 2

A coating was prepared using the formulation shown below. This coating was applied to a polycarbonate substrate at a film thickness of 50 µm. UV irradiation was applied from a height of 15 mm to the coated film using two low-pressure mercury lamps (1w/cm) at a line speed of 6 m/min. Further irradiation was applied from a height of 15 cm using a high-pressure mercury lamp (80w/cm) at a line speed of 6 m/min. The results of the evaluation are shown in Table 1.

| Coating formulation | |
|---|---|
| Urethane acrylate (Synthesis Example 1) | 97 parts |
| 2,4,6- Trimethylbenzoyldiphenyl phosphine oxide | 3 parts |
| Total | 100 parts |

2,4,6- Trimethylbenzoyldiphenyl phosphine oxide absorbs light having wavelengths not lower than 400 nm and has a molar absorption coefficient of approximately 200(1 • mol⁻¹ • cm⁻¹⁾ for such light having wavelengths not lower than 400 nm.

### Comparative Example 3

A coating was prepared using the formulation shown below. This coating was applied to a polycarbonate substrate at a film thickness of 50 µm. UV irradiation was applied from a height of 15 mm to the coated film using two low-pressure mercury lamps (1w/cm) at a line speed of 6 m/min. Further irradiation was applied from a height of 15 cm using a high-pressure mercury lamp (80w/cm) at a line speed of 6 m/min. The results of the evaluation are shown in Table 1.

| Coating formulation | |
|---|---|
| Bis-phenol A epoxyacrylate | 70 parts |
| Hexamethylene diacrylate | 27 parts |
| Darocure 1173 | 3 parts |
| Total | 100 parts |

**Table 1**

| | Wrinkle Formation | Reproducibility | Gloss | Adhesion |
|---|---|---|---|---|
| Example | | | | |
| 1 | ⓞ | ⓞ | 15 | 100/100 |
| 2 | ⓞ | ⓞ | 17 | 100/100 |

| Comparative Example | | | | |
|---|---|---|---|---|
| 1 | x | x | 100 | 40/100 |
| 2 | x | x | 98 | 85/100 |
| 3 | Δ | x | 90 | 50/100 |

### Evaluation method

Wrinkle formation: This was classified as follows by visual inspection.
ⓞ : Uniform wrinkles formed
Δ : Wrinkles formed partially
x : No wrinkles formed

### Reproducibility

The coatings prepared were created on a polycarbonate sheet and cured by UV irradiation in the same way. The surface of the coating was then visually inspected for wrinkle formation. One hundred test piece samples prepared by coating and curing were assessed in terms of the uniformity of the matte level and reproducibility, using the following grades.
ⓞ : All 100 test pieces showed uniform and similar matte levels.
Δ : A certain matte level was achieved, but matte levels varied from test piece to test piece.
x : Matte levels were not achieved; or if achieved, each test piece exhibited a different appearance, with poor reproducibility.

### Gloss

According to the standards prescribed by JIS K-5400, 60-degree gloss was measured. Lower gloss values indicate better film matte levels.

### Adhesion

One hundred 1-mm crosscuts were made on the coated film. After Scotch tape was applied to the crosscuts, then delaminated, the remaining numbers of crosscut parts were counted. Adhesion was judged to be better for greater numbers of remaining parts.

Thus, as described in the foregoing, this invention is capable of providing a resin composition for a matte-finished surface that exhibits excellent design and cosmetic factors, in addition to adequate adhesion to substrates when coated. This invention can also provide a method of forming a matte-finished surface using the above resin composition that offers superior reproducibility.

## Claims

1. A resin composition for forming a matte-finished surface comprising:
(A) a urethane acrylate prepared with (a) an alicyclic isocyanate compound, (b) an ester-type polyol, and (c) an acrylate having hydroxyl group as its essential components;
(B) an acrylate-type reactive diluent; and
(C) a photo-initiator having absorption characteristics of molar absorbance coefficient of not greater than 100 (1 • mol⁻¹ • cm⁻¹) for light having a wavelength not lower than 400 nm.

2. A resin composition for forming the matte-finished surface as defined in Claim 1, wherein the polyester-type polyol (b) is a poly-caprolactone having 3 or more functional hydroxyl groups.

3. A resin composition for forming the matte-finished surface as defined in Claim 1, wherein the acrylate-type reactive diluent (B) is one having tetrahydrofurfuryl group(s).

4. A resin composition for forming the matte-finished surface as defined in Claim 2, wherein the acrylate-type reactive diluent (B) is one having tetrahydrofurfuryl group(s).

5. A method of forming a matte-finished surface, wherein the resin composition as defined in any of Claims 1-3 is irradiated with a UV lamp capable of emitting light at a maximum intensity at not more than 300 nm, with the relative intensity of light in the range of from 300 nm to 800 nm being not more than 20%, causing wrinkles to form on the resin surface.

6. A method of forming a matte-finished surface comprising the steps of:
providing minute wrinkles on the cured resin surface by irradiating the resin composition as defined in any of Claims 1 - 3 with a UV lamp capable of emitting light at a maximum intensity at not more than 300 nm, with the relative intensity of light in the range of from 300 nm to 800 nm being not more than 20%; and
further curing the above resin by irradiating it with a UV light at a maximum intensity at not less than 300 nm.
